# EUROPÄISCHE PATENTSCHRIFT

(11) **EP 3 718 950 B1**
(45) Veröffentlichungstag und Bekanntmachung des Hinweises auf die Patenterteilung: **12.04.2023**
(21) Anmeldenummer: 19217804.4
(22) Anmeldetag: 19.12.2019
(51) Int. Cl.: B66F 9/06, B66F 3/24, B66F 3/46, B65G 7/02

(54) **ROTATIONSSCHWERLASTFAHRWERK**
ROTATING HEAVY DUTY RUNNING GEAR
TRAIN D'ATTERRISSAGE GROS TONNAGE ROTATIF

(30) Priorität: 28.03.2019 DE 202019101761 U
(43) Veröffentlichungstag der Anmeldung: 07.10.2020
(73) Patentinhaber: Idler, Udo, 70839 Gerlingen (DE)
(72) Erfinder: Idler, Udo, 70839 Gerlingen (DE)
(74) Vertreter: RDL Patentanwälte PartG mbB

(56) Entgegenhaltungen:
- EP-A1- 2 808 234
- EP-A2- 1 334 947
- DE-A1-102016 107 451
- DE-U1-202014 000 755
- DE-U1-202014 006 562

## Beschreibung

Die Erfindung betrifft ein Rotationsschwerlastfahrwerk und eine Anordnung, die mehrere Rotationschwerlastfahrwerke umfasst.

Schwerlastfahrwerke, insbesondere unbemannte Schwerlastfahrwerke, wie diese bspw. in Logistikzentren oder Werkshallen eingesetzt werden, werden dazu verwendet, schwere Lasten von einem Ort zu einem anderen zu transportieren. Hierzu ist es erforderlich, das Schwerlastfahrwerk oder mehrere Schwerlastfahrwerke zunächst unter die Last zu fahren, dann die Last anzuheben und anschließend die Last zu dem Zielort zu transportieren. Dort angekommen, kann die Last wieder abgesenkt werden und das oder die Schwerlastfahrwerke wieder von der Last entfernt werden. Für den eigentlichen Transport verfügen Schwerlastfahrwerke über Rollen bzw. Räder, die ein Fahren der Schwerlastfahrwerke mit der angehobenen Last ermöglichen. Entsprechend stabil müssen diese Rollen bzw. Räder ausgebildet sein. Sind die Räder bzw. Rollen um eine vertikale Achse drehbar, so spricht man auch von einem Rotationsschwerlastfahrwerk.

Rotationsschwerlastfahrwerke zum Anheben von Lasten werden vielfältig eingesetzt. Dabei ist es üblicherweise erforderlich, das Rotationsschwerlastfahrwerk oder auch mehrere Rotationsschwerlastfahrwerke unter die Last zu fahren und, sobald diese sich unter der Last befindet bzw. befinden, so zu betätigen, dass die Last angehoben wird, wobei sichergestellt sein sollte, dass die Last sich nicht zu eine Seite hin neigt und die Last somit in der Waagerechten in eine vorab bestimmte Position in vertikaler Richtung angehoben werden kann. Dies stellt insbesondere bei einem unebenen Untergrund oder einem nicht einheitlich beschaffenen Untergrund ein erhebliches Problem dar. Zum Anheben der Last werden sogenannte Hebeaufnahmen verwendet, die in vertikaler Richtung verfahrbar sind, an die Last angreifen und dann diese anheben.

Die Druckschrift DE 10 2010 015 115 A1 beschreibt ein mobiles Hebegerät zum Anheben schwerer Lasten mit einem Gestell, einem Hydraulikzylinder und mindestens einer Hydraulikpumpe. Die Hydraulikpumpe ist dabei direkt oder über ein Getriebe von einem Elektromotor angetrieben. Bei schweren Lasten, wie bspw. einer Maschine, kann vorgesehen sein, an den vier Ecken der Maschine vier autarke Hebegeräte anzuordnen, die jeweils über eine eigene Positionsregelung verfügen.

Aus der Druckschrift DE 10 2009 015 783 U1 ist eine Antriebseinheit für ein Schwerlasttransportsystem bekannt, die eine Tragestruktur, ein Treibrad, das von einem Antriebsmotor angetrieben werden kann, und ein Verbindungsmittel zum Befestigen der Antriebseinheit an einem Transportfahrwerk aufweist. Die Antriebseinheit ist dabei in vertikaler Richtung relativ zu dem Transportfahrwerk angeordnet. Weiterhin sind mehrere Stützräder vorgesehen, die um eine Achse drehbar sind.

Die Druckschrift DE 10 2013 016 381 A1 beschreibt ein Transportfahrzeug zum störungsfreien Transport von Lastregalen in Werkshallen mit einer Trägerplatte, bei dem ein Neigungssensor zum Einsatz kommt. Antriebsräder sind jeweils an einer Drehachse gesondert gelagert.

Aus der Druckschrift EP 2 995 584 A1 ist eine Transportvorrichtung für eine Last mit mindestens zwei voneinander beabstandeten Achsen mit jeweils angetriebenen Rädern bekannt. Ein Anheben der Last wird mit Hilfe eines Hydraulikteils bewerkstelligt. Es sind weiterhin Sensoren zum Erfassen einer Umgebung und/oder der Position vorgesehen.

Die Druckschrift DE 10 2007 046 868 A1 beschreibt eine Transportvorrichtung zum Aufnehmen einer Last, die über Funk steuerbar ist. Zur Überwachung des Betriebs sind Sensoren vorgesehen.

Die Druckschrift EP 2 886 414 A1 beschreibt eine Transportvorrichtung für Radsätze und Drehgestelle, die wenigstens zwei Transporteinheiten umfasst. Mit einem Sensor wird eine Messgröße erfasst, die proportional zu einer Last ist. Als Sensor kommt bspw. ein Dehnungsmessstreifen in Betracht.

Aus der Druckschrift EP 2 353 775 A1 ist eine Vorrichtung zum Verschieben eines Gegenstands bekannt. Bei dieser wird ein synchrones Anheben und Absenken des Gegenstands, was mittels einer Hebevorrichtung erfolgt, durch einen Sensor überwacht. DE 10 2016 107451 A1 offenbart den Oberbegriff des Anspruchs 1.

Vor diesem Hintergrund werden ein Rotationsschwerlastfahrwerk mit den Merkmalen des Anspruchs 1 und eine Anordnung nach Anspruch 10 vorgestellt. Ausführungsformen ergeben sich aus den abhängigen Ansprüchen und der Beschreibung.

Es wird ein Rotationsschwerlastfahrwerk vorgestellt, das eine Tragstruktur bzw. einen Tragerahmen bzw. eine Plattform, mindestens eine Rollenkassette, die um eine vertikale Achse drehbar ist und jeweils mindestens eine Rolle aufweist, wobei die mindestens eine Rollenkassette an einer Unterseite der Tragstruktur angeordnet ist, und mindestens eine Hebeaufnahme zum Durchführen einer Hubbewegung in einer vertikalen Richtung aufweist.

Die mindestens eine Rollenkassette ist somit derart angeordnet, dass die Rollen über einen Untergrund abrollen können, so dass die Tragstruktur und damit das gesamte Rotationsschwerlastfahrwerk über diesen Untergrund gefahren und damit bewegt werden kann.

Die Hebeaufnahme ist in bzw. an der Tragstruktur vorgesehen, wobei die mindestens eine Hebeaufnahme dazu eingerichtet ist, an einer Last anzugreifen und diese zu heben. Die Last kann dabei nach oben, d. h. weg vom Untergrund, auf dem sich das Rotationsschwerlastfahrwerk befindet, angehoben werden. Der Hub geht somit in Richtung weg von dem Untergrund nach oben. Hierzu ist der Hebeaufnahme ein Antrieb zugeordnet, der dazu eingerichtet ist, die Hebeaufnahme zum Durchführen einer Hubbewegung anzutreiben.

Weiterhin ist jeder der mindestens einen Hebeaufnahme ein Wegsensor zugeordnet, der dazu dient, ein Maß der Hubbewegung zu erfassen. Dieser Wegsensor bzw. Wegmesssensor erfasst somit, wie weit die Hebeaufnahme ausgefahren ist.

Der Antrieb der Hebeaufnahme umfasst bspw. einen Hydraulikzylinder und eine Pumpe. Mit einem Hydraulikzylinder kann der Hub sehr genau eingestellt werden. Die typischerweise elektrische Ansteuerung der Pumpe ermöglicht vielfältige Möglichkeiten zur Steuerung. So kann bspw. über den Druck des Hydraulikzylinders und über die elektrischen Größen zur Ansteuerung der Pumpe der Betrieb genau überwacht werden. Dabei kann bspw. festgestellt werden, ob die Hebeaufnahme bereits an der Last anliegt und zum Anheben dann ein erhöhtes Moment aufgebracht werden muss.

Es kann weiterhin eine Recheneinheit vorgesehen sein, die ein an dem Hydraulikzylinder anliegenden Druck in einen Gewichtswert umrechnet. Dieser Wert kann dann an eine Anzeige weitergegeben werden, d. h. es wird ein Signal an diese Anzeige weitergegeben, das als Information diesen Wert trägt. Typischerweise wird das Gewicht in kg angegeben. Dieser Wert kann analog oder digital angezeigt werden.

Die mindestens eine Rolle kann derart angeordnet sein, dass diese einen Nachlauf aufweist. Die Rolle bzw. das Rad läuft dann der Lenkungsdrehachse nach, es dreht sich somit selbst in die gewünschte Fahrtrichtung.

Die mindestens eine Rolle kann über eine Achsblockierung, bspw. mittels eines Arretierbolzens, blockiert werden. Dies bedeutet, dass bspw. in einer Rollenkassette ein Arretierbolzen durch die Drehachse der Rollen geführt wird, der dann verhindert, dass die Rollen sich weiterhin um eine vertikale Achse drehen können. So kann ein Schwenken der Rollen und damit auch ein Schwenken des gesamten Rotationsschwerlastfahrwerks verhindert werden.

Es kann bzw. können weiterhin ein Funkempfänger einer Funkanlage und/oder ein Energiespeicher, bspw. eine Batterie oder ein Akkumulator, in dem Rotationsschwerlastfahrwerk integriert sein. Dieses kann dann als autarke Einheit arbeiten.

Das beschriebene Rotationsschwerlastfahrwerk weist weiterhin einen ausziehbaren Transportgriff auf, mit dem dieses per Hand rangiert werden kann.

So kann dieses bspw. per Hand unter die anzuhebende Last bewegt werden und anschließend, wenn sich die Last am Zielort befindet, wieder wegbewegt werden.

Das Rotationsschwerlastfahrwerk kann außerdem über eine abnehmbare Anhängevorrichtung verfügen. So kann, wenn das Rotationsschwerlastfahrwerk mit einer Antriebseinheit bewegt werden soll, eine für diese passende Anhängevorrichtung angebracht werden. Das Rotationsschwerlastfahrwerk ist dann flexibel einsetzbar.

Die Hebeanordnung kann weiterhin an ihrem oberen Ende einen Drehteller aufweisen, auf dem dann die Last aufliegt.

Es wird zudem eine Anordnung mit mindestens zwei Rotationsschwerlastfahrwerken der hierin beschriebenen Art vorgestellt, wobei die Rotationsschwerlastfahrwerke über eine gemeinsame Steuerung zu steuern sind. Sobald sich die Rotationsschwerlastfahrwerke unter der Last befinden, können diese dann mit der Steuerung gemeinsam angesteuert werden und die Hebeanordnungen der Rotationsschwerlastfahrwerke können synchron betätigt werden.

Die Steuerung kann als zentrale Steuerung ausgebildet sein. In diesem Fall kann bspw. auch eines der Rotationsschwerlastfahrwerke als Master dienen, die anderen Rotationsschwerlastfahrwerke sind dann Slaves. Die Rotationsschwerlastfahrwerke können dann über eine Funkverbindung miteinander kommunizieren. Es kann auch eine zentrale externe Steuerung vorgesehen sein, die ebenfalls über eine Funkverbindung mit den Rotationsschwerlastfahrwerken kommunizieren kann.

Bei einer dezentralen Steuerung übernehmen bspw. die Rotationsschwerlastfahrwerke gemeinsam die Steuerung des Ablaufs.

Die eingesetzten Wegmesssensoren stellen sicher, dass die Hubbewegungen der Hebeanordnungen aufeinander abgestimmt werden können.

Es kann weiterhin eine Recheneinheit zum Berechnen eines Gewichts und eine Anzeige zum Anzeigen dieses Gewichts bzw. eines Gewichtswerts vorgesehen sein. Die Recheneinheit kann separat ausgebildet oder in der genannten Steuerung aufgenommen sein.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Figur 1 zeigt in einer Seitenansicht ein Rotationsschwerlastfahrwerk.
Figur 2 zeigt in einer Draufsicht das Rotationsschwerlastfahrwerk aus Figur 1.
Figur 3 zeigt in einer Draufsicht eine Ausführung der vorgestellten Anordnung.

Die Erfindung ist anhand von Ausführungsbeispielen in der Zeichnung schematisch dargestellt und wird im folgenden unter Bezugnahme auf die Zeichnung ausführlich beschrieben.

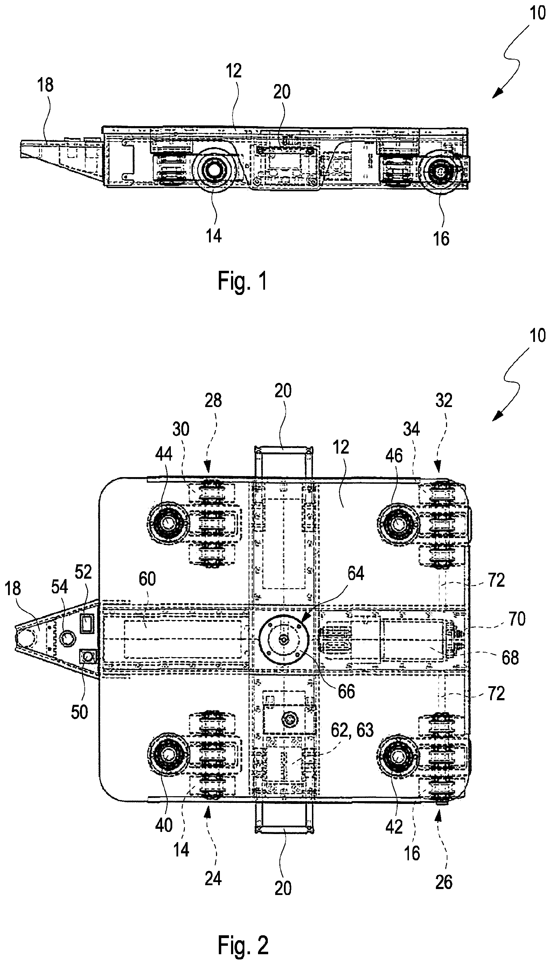

Figur 1 zeigt in einer Seitenansicht eine Ausführung des vorgestellten Rotationsschwerlastfahrwerks, das insgesamt mit der Bezugsziffer 10 bezeichnet ist. Die Darstellung zeigt eine Tragstruktur 12, die eine Grundstruktur darstellt und auch als Plattform oder Tragrahmen bezeichnet werden kann. Diese Tragstruktur ist typischerweise aus einer Struktur aus Rahmenelementen zusammengebaut und bspw. aus einem Metall gefertigt.

Am unteren Ende der Tragstruktur 12 sind eine erste Rolle 14 und eine zweite Rolle 16 angebracht. Weiterhin zeigt die Darstellung eine Anhängevorrichtung 18 und einen ausziehbaren Transportgriff 20.

Figur 2 zeigt das Rotationsschwerlastfahrwerk 10 aus Figur 1 in einer Draufsicht. Die Darstellung zeigt die Tragstruktur 12, eine erste Rollenkassette 24 mit drei ersten Rollen 14, eine zweite Rollenkassette 26 mit drei zweiten Rollen 16, eine dritte Rollenkassette 28 mit drei dritten Rollen 30 und eine vierte Rollenkassette 32 mit drei vierten Rollen 34. Die Rollenkassetten 24, 26, 28 und 32 sind jeweils um eine vertikale Drehachse 40, 42, 44 bzw. 46 drehbar. Die Rollen 14, 16, 30 und 34 verfügen bezogen auf ihre Drehachse 40, 42, 44 bzw. 46 jeweils über einen Nachlauf.

Weiterhin zeigt Figur 2 die Anhängevorrichtung 18, die abnehmbar ist, so dass das Rotationsschwerlastfahrwerk 10 von unterschiedlichen Fahrzeugen mit verschiedenen Kupplungen gezogen werden kann. An der Anhängevorrichtung 18 sind eine Ladebuchse 50, ein Schalter 52 und eine Kontrollleuchte 54 vorgesehen.

Die Darstellung zeigt weiterhin einen Akku 60 als Energiespeicher, der über die Ladebuchse 50 zu laden ist, die ausziehbaren Transportgriffe 20, einen Funkempfänger 62 einer Fernsteuerung, in der auch ein Wegmesssensor 63 als Weg- bzw. Hubmesssystem integriert ist, eine Hebeanordnung bzw. -aufnahme 64, auf der ein Drehteller 66, der wiederum über eine Arretierung verfügt, angeordnet ist, eine Pumpe 68 bzw. Hydraulikpumpe, einen Hydraulikzylinder 70 und zwei Arretierbolzen 72 zum Arretieren der zweiten und vierten Rollen 16 und 34, so dass diese nicht mehr um ihre Drehachse 42 bzw. 46 gedreht bzw. geschwenkt werden können.

Die Darstellung verdeutlicht, dass alle Komponenten, die zum Betrieb erforderlich sind, in dem Rotationsschwerlastfahrwerk integriert sind. Auf diese Weise ist ein autarker Betrieb des Rotationsschwerlastfahrwerks möglich.

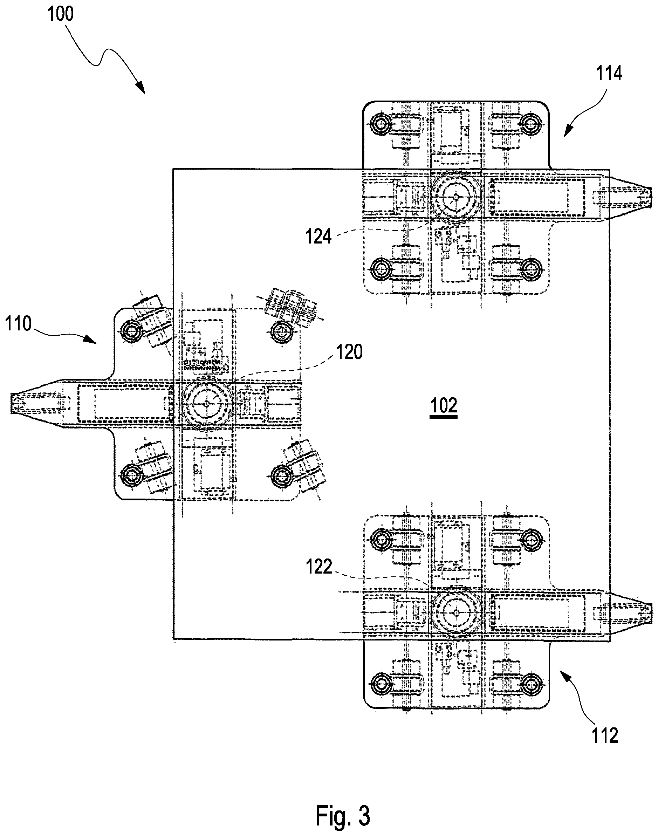

Figur 3 zeigt eine Anordnung zum Transportieren einer Last, die insgesamt mit der Bezugsziffer 100 bezeichnet ist. Die Last ist mit Bezugsziffer 102 bezeichnet.

Die Anordnung 100 umfasst ein erstes Rotationsschwerlastfahrwerk 110, ein zweites Rotationsschwerlastfahrwerk 112 und ein drittes Rotationsschwerlastfahrwerk 114. Diese Rotationsschwerlastfahrwerke 110, 112, 114 sind entsprechend dem Rotationsschwerlastfahrwerk 10 aus Figuren 1 und 2 ausgebildet, so dass in dieser Darstellung die einzelnen Komponenten nicht näher bezeichnet werden.

Von Bedeutung ist, dass die erste Hebeaufnahme 120 des ersten Rotationsschwerlastfahrwerks 110, die zweite Hebeaufnahme 122 des zweiten Rotationsschwerlastfahrwerks und die dritte Hebeaufnahme 124 des dritten Rotationsschwerlastfahrwerks 114 sich so unter der Last 102 befinden, dass diese mit den Hebeaufnahmen 120, 122, 124 zusammen angehoben werden kann. Hierfür ist von Vorteil, wenn die Hubbewegungen der Hebeaufnahmen 120, 122, 124 zueinander synchron erfolgen.

## Patentansprüche

1. Rotationsschwerlastfahrwerk mit
- einer Tragstruktur (12),
- mindestens einer Rollenkassette (24, 26, 28, 32), die um eine vertikale Achse drehbar ist und jeweils mindestens eine Rolle (14, 16, 30, 34) aufweist, wobei die mindestens eine Rollenkassette (24, 26, 28, 32) an einer Unterseite der Tragstruktur (12) angeordnet ist,
- mindestens einer Hebeaufnahme (64, 120, 122, 124) zum Durchführen einer Hubbewegung in einer vertikalen Richtung, die in der Tragstruktur (12) vorgesehen ist, wobei die mindestens eine Hebeaufnahme (64, 120, 122, 124) dazu eingerichtet ist, an einer Last (102) anzugreifen und diese zu heben, und wobei der Hebeaufnahme (64, 120, 122, 124) ein Antrieb zugeordnet ist, der dazu eingerichtet ist, die Hebeaufnahme (64, 120, 122, 124) zum Durchführen einer Hubbewegung anzutreiben, wobei
jeder der mindestens einen Hebeaufnahme (64, 120, 122, 124) ein Wegsensor 63 zugeordnet ist, der dazu dient, ein Maß der Hubbewegung zu erfassen,
**dadurch gekennzeichnet, dass**
das Rotationsschwerlastfahrwerk (10, 110, 112, 114) über einen ausziehbaren Transportgriff (20) verfügt.

2. Rotationsschwerlastfahrwerk nach Anspruch 1, bei dem der Antrieb der Hebeaufnahme (64, 120, 122, 124) einen Hydraulikzylinder (70) und eine Pumpe (68) umfasst.

3. Rotationsschwerlastfahrwerk nach Anspruch 2, bei dem eine Recheneinheit vorgesehen ist, die dazu eingerichtet ist, einen Druck, der an dem Hydraulikzylinder (70) anliegt, in ein Gewicht umzurechnen und den berechneten Wert für das Gewicht an eine Anzeige zum Anzeigen dieses Werts weiterzugeben.

4. Rotationsschwerlastfahrwerk nach einem der Ansprüche 1 bis 3, bei dem die mindestens eine Rolle (14, 16, 30, 34) derart angeordnet ist, dass diese einen Nachlauf aufweist.

5. Rotationsschwerlastfahrwerk nach einem der Ansprüche 1 bis 4, bei dem die mindestens eine Rolle (14, 16, 30, 34) über eine Achsblockierung zu blockieren ist.

6. Rotationsschwerlastfahrwerk nach einem der Ansprüche 1 bis 5, in dem ein Funkempfänger (62) einer Funkanlage integriert ist.

7. Rotationsschwerlastfahrwerk nach einem der Ansprüche 1 bis 6, in dem ein Energiespeicher integriert ist.

8. Rotationsschwerlastfahrwerk nach einem der Ansprüche 1 bis 7, das über eine abnehmbare Anhängervorrichtung (18) verfügt.

9. Anordnung mit mindestens zwei Rotationsschwerlastfahrwerken (10, 110, 112, 114) nach einem der Ansprüche 1 bis 9, wobei die Rotationsschwerlastfahrwerke (10, 110, 112, 114) über eine gemeinsame Steuerung zu steuern sind.

10. Anordnung nach Anspruch 9, die eine zentrale Steuerung aufweist.

11. Anordnung nach Anspruch 9 oder 10, die eine Recheneinheit zum Umrechnen eines Drucks in ein Gewicht und eine Anzeige zum Anzeigen eines Werts für das Gewicht aufweist.

## Claims

1. A rotating heavy-duty running gear with
- a support structure (12),
- at least one roller cassette (24, 26, 28, 32) that is rotatable about a vertical axis and has, respectively, at least one roller (14, 16, 30, 34), wherein the at least one roller cassette (24, 26, 28, 32) is arranged on the bottom side of the support structure (12),
- at least one lifting receptacle (64, 120, 122, 124) provided in the support structure (12) for carrying out a lifting movement in a vertical direction, wherein the at least one lifting receptacle (64, 120, 122, 124) is configured to grip a load (102) and lift it, and wherein a drive that is configured to drive the lifting receptacle (64, 120, 122, 124) for carrying out a lifting movement is assigned to the lifting receptacle (64, 120, 122, 124), wherein a path sensor 63 that serves to detect a measure of the lifting movement is assigned to each of the at least one lifting receptacle(s) (64, 120, 122, 124),
**characterized in that**
the rotating heavy-duty running gear (10, 110, 112, 114) has a pull-out transport handle (20).

2. The rotating heavy-duty running gear according to claim 1, wherein the drive of the lifting receptacle (64, 120, 122, 124) comprises a hydraulic cylinder (70) and a pump (68).

3. The rotating heavy-duty running gear according to claim 2, wherein a computing unit is provided that is configured to convert a pressure that is applied at the hydraulic cylinder (70) into a weight and to forward the calculated value for the weight to a display for displaying this value.

4. The rotating heavy-duty running gear according to any of claims 1 to 3, wherein the at least one roller (14, 16, 30, 34) is arranged such that this has a trail.

5. The rotating heavy-duty running gear according to any of claims 1 to 4, wherein the at least one roller (14, 16, 30, 34) can be locked using an axle lock.

6. The rotating heavy-duty running gear according to any of claims 1 to 5, wherein a radio receiver (62) of a radio system is integrated.

7. The rotating heavy-duty running gear according to any of claims 1 to 6, wherein an energy store is integrated.

8. The rotating heavy-duty running gear according to any of claims 1 to 7, which has a removable trailer hitch (18).

9. An arrangement with at least two rotating heavy-duty running gears (10, 110, 112, 114) according to any of claims 1 to 9, wherein the rotating heavy-duty running gears (10, 110, 112, 114) are to be controlled via a common controller.

10. The arrangement according to claim 9, which has a central controller.

11. The arrangement according to claim 9 or 10, which has a computing unit for converting a pressure into a weight and a display for displaying a value for the weight.

## Revendications

1. Châssis rotatif pour charges lourdes comportant
- une structure porteuse (12),
- au moins une cassette à roulettes (24, 26, 28, 32), rotative autour d'un axe vertical et présentant à chaque fois au moins une roulette (14, 16, 30, 34), l'au moins une cassette à roulettes (24, 26, 28, 32) étant disposée sur le dessous de la structure porteuse (12),
- au moins un réceptacle de levage (64, 120, 122, 124) destiné à effectuer un mouvement de levage dans une direction verticale et prévu dans la structure porteuse (12), l'au moins un réceptacle de levage (64, 120, 122, 124) étant conçu pour saisir une charge (102) et la soulever, le réceptacle de levage (64, 120, 122, 124) étant associé à un mécanisme d'entraînement, conçu pour entraîner le réceptacle de levage (64, 120, 122, 124) afin d'effectuer un mouvement de levage, un capteur de mouvement (63) étant associé à chacun des au moins un réceptacle de levage (64, 120, 122, 124), lequel sert à détecter une ampleur du mouvement de levage,
**caractérisé en ce que**
le châssis rotatif pour charges lourdes (10, 110, 112, 114) dispose d'une poignée de transport extensible (20).

2. Châssis rotatif pour charges lourdes selon la revendication 1, dans lequel le mécanisme d'entraînement du réceptacle de levage (64, 120, 122, 124) comprend un vérin hydraulique (70) et une pompe (68).

3. Châssis rotatif pour charges lourdes selon la revendication 2, pourvu d'une unité de calcul destinée à convertir une pression appliquée au vérin hydraulique (70) en un poids et à transmettre la valeur calculée pour le poids à un écran pour indiquer cette valeur.

4. Châssis rotatif pour charges lourdes selon l'une des revendications 1 à 3, dans lequel l'au moins une roulette (14, 16, 30, 34) est disposée de manière à assurer une marche par inertie.

5. Châssis rotatif pour charges lourdes selon l'une des revendications 1 à 4, dans lequel l'au moins une roulette (14, 16, 30, 34) doit être bloquée par une butée axiale.

6. Châssis rotatif pour charges lourdes selon l'une des revendications 1 à 5, dans lequel est intégré un récepteur radio (62) d'une installation radio.

7. Châssis rotatif pour charges lourdes selon l'une des revendications 1 à 6, dans lequel est intégré un accumulateur d'énergie.

8. Châssis rotatif pour charges lourdes selon l'une des revendications 1 à 7, doté d'un réceptacle d'attelage (18) amovible.

9. Dispositif équipé d'au moins deux châssis rotatifs pour charges lourdes (10, 110, 112, 114) selon l'une des revendications 1 à 9, dans lequel les châssis rotatifs pour charges lourdes (10, 110, 112, 114) peuvent être commandés par une commande commune.

10. Dispositif selon la revendication 9, présentant une commande centrale.

11. Dispositif selon la revendication 9 ou 10, présentant une unité de calcul pour convertir une pression en un poids et un écran pour indiquer une valeur pour le poids.
